# EUROPÄISCHE PATENTSCHRIFT

(11) **EP 1 619 085 B1**
(45) Veröffentlichungstag und Bekanntmachung des Hinweises auf die Patenterteilung: **12.03.2008**
(21) Anmeldenummer: 05104431.1
(22) Anmeldetag: 24.05.2005
(51) Int. Cl.: B60R 21/01

(54) **Anordnung zur Erfassung von Bewegungen eines Fahrzeuges**
Arrangement for monitoring the movements of a vehicle
Agencement pour surveillance le mouvements d'une voiture

(30) Priorität: 24.07.2004 DE 102004036044
(43) Veröffentlichungstag der Anmeldung: 25.01.2006
(73) Patentinhaber: ROBERT BOSCH GMBH, 70442 Stuttgart (DE)
(72) Erfinder: Zimmermann, Uwe, 71686, Remseck (DE); Pruksch, Achim, 74861, Neudenau (DE)

(56) Entgegenhaltungen:
- DE-A1- 10 204 128
- DE-C1- 19 507 957
- US-A- 6 023 220
- US-A- 6 038 496

## Beschreibung

### Stand der Technik

Die Erfindung betrifft eine Anordnung zur Erfassung von Bewegungen eines Fahrzeuges in Bezug auf eine Fahrbahn.

Zur Erhöhung der Fahrsicherheit sind verschiedene Sensoren bekannt geworden, unter anderem auch optische Abtasteinrichtungen mit einer Zeile aus optoelektrischen Wandlern (z.B. CCD-Array) - im folgenden auch Sensorzeile genannt. Ein derartiges Fahrzeug mit optischer Abtasteinrichtung für einen seitlichen Fahrbahnbereich ist durch DE 195 07 957 C1 bekannt geworden. Mit dieser Abtasteinrichtung und einer nachgeschalteten Auswerteeinheit erfolgt eine Einschlafwarnung, eine automatische Spurhaltungsfunktion oder eine Raumrücküberwachungs- oder eine Umfeldüberwachungsfunktion für das Fahrzeug.

Bei einer durch DE 102 04 128 A1 bekannt gewordenen Vorrichtung zur Überrollerkennung ist eine Stereo-Kamera in Fahrtrichtung vorgesehen, wobei damit eine Abstandsmessung zu einem Objekt außerhalb des Fahrzeugs möglich ist und zu diesem Objekt jeweils Bildvektoren ermittelt werden. Insbesondere durch die Stereo-Kamera ist diese bekannte Vorrichtung recht aufwändig.

Die gattungsgemäße US 6,023,220 offenbart eine Vorrichtung zum Abtasten der Fahrbahnoberfläche und zum Berechnen des Wankwinkels des Kraftfahrzeuges. Aus der US 6,038,496 ist ein Fahrzeug mit optischer Abtasteinrichtung für einen seitlichen Fahrbahnbereich bekannt.

Aufgabe der vorliegenden Erfindung ist es, Bewegungen eines Fahrzeuges in Bezug auf eine Fahrbahn, insbesondere den Wankwinkel, mit einfachen Mitteln zuverlässig zu erfassen.

### Vorteile der Erfindung

Diese Aufgabe wird erfindungsgemäß dadurch gelöst, dass an beiden Längsseiten des Fahrzeuges mindestens ein optischer Abstandssensor auf die Fahrbahn gerichtet ist und den Abstand zur Fahrbahn misst und dass aus der Differenz der Messergebnisse beider Seiten ein Maß für den Wankwinkel berechnet wird.

Die erfindungsgemäße Anordnung ermöglicht in einfacher und zuverlässiger Weise die Berechnung des Wankwinkels und somit die Erfassung der Neigung für einen seitlichen Überschlag.

Vorzugsweise ist bei der erfindungsgemäßen Anordnung vorgesehen, dass mindestens der eine Abstandssensor mindestens eine Zeile von optoelektrischen Wandlern umfasst, auf die ein Teil der Fahrbahn abgebildet wird, dass in einer vorgegebenen Parallaxe ein Lichtstrahl auf die Fahrbahn gerichtet ist und dass aus dem Ort der Abbildung des vom Lichtstrahl auf der Fahrbahn verursachten Lichtprofils der Abstand von der Fahrbahn berechnet wird.

Bei der erfindungsgemäßen Anordnung kann ferner vorgesehen sein, dass ein Warnsignal ausgelöst wird, wenn der Wankwinkel einen vorgegebenen Wert überschreitet. Dabei ist eine geeignete Anzeige des Wankwinkels ebenfalls möglich.

Die Erfindung ermöglicht eine Warnung vor einem Verlassen einer mit Fahrbahnmarkierungen versehenen Fahrbahn dadurch, dass die Zeile des optischen Abstandssensors quer zur Längsrichtung des Fahrzeuges angeordnet ist und dass ein Warnsignal beim Erfassen von Fahrbahnmarkierungen ausgelöst wird. Dazu kann das Lichtprofil der Lichtquelle quer zur Fahrbahn so weit ausgedehnt sein, dass die Fahrbahnmarkierungen spätestens bei Annäherung an das Fahrzeug beleuchtet werden.

Eine Weiterbildung der Erfindung besteht darin, dass die Zeile derart angeordnet ist, dass mindestens eine Komponente parallel zur Fahrzeuglängsachse ist und dass aus der Bewegung von auf der Zeile abgebildeten Fahrbahnstrukturen die Fahrzeuggeschwindigkeit gemessen wird. Diese Weiterbildung hat den Vorteil, dass die Fahrzeuggeschwindigkeit über Grund gemessen wird, das heißt, dass gegenüber der üblichen Tachometermessung Abweichungen durch Schlupf der Reifen oder durch Toleranz der effektiven Reifendurchmesser vermieden werden.

Zur Durchführung mehrerer der vorgenannten Funktionen kann bei einer vorteilhaften Ausgestaltung der erfindungsgemäßen Anordnung vorgesehen sein, dass die optoelektrischen Wandler in zwei sich kreuzenden Zeilen angeordnet sind. Dabei besteht eine Möglichkeit darin, dass die sich rechtwinklig kreuzenden Zeilen parallel und senkrecht zur Fahrzeugachse sind. Eine andere Möglichkeit ist dadurch gegeben, dass die sich rechtwinklig kreuzenden Zeilen jeweils einen Winkel von 45° mit der Fahrzeugachse einschließen. Bei dieser Möglichkeit ist es gegebenenfalls erforderlich, den Winkel von 45° bei der Ermittlung der Messergebnisse zu berücksichtigen. Es sind auch andere, von 0° bzw. 45° abweichende Ausrichtungen der Zeilen möglich.

Eine andere Weiterbildung der Erfindung ermöglicht die Bestimmung des Nickwinkels dadurch, dass mindestens ein weiterer Abstandssensor gegenüber den an beiden Längsseiten des Fahrzeuges angeordneten optischen Abstandssensoren in Längsrichtung versetzt angeordnet ist und dass dessen Abstand zur Fahrbahn zusammen mit den Messergebnissen der optischen Abstandssensoren zur Berechnung des Nickwinkels benutzt wird.

Eine konstruktiv einfache Anbringung der erfindungsgemäßen Anordnung am Fahrzeug ist durch eine vorteilhafte Ausgestaltung dadurch möglich, dass an beiden Längsseiten mindestens ein optischer Abstandssensor am Rückspiegel angeordnet ist.

Bei einer weiteren Ausgestaltung der Erfindung ist vorgesehen, dass ein Warnsignal abgeleitet wird, wenn mindestens einer der optischen Abstandssensoren kein auswertbares Signal erzeugt. Damit wird verhindert, dass sich beispielsweise der Fahrer des Fahrzeuges auf das Ausbleiben eines Warnsignals, das einen gefährlichen Fahrzustand anzeigen sollte, verlässt, obwohl ein solches Warnsignal aufgrund anderer Umstände gar nicht abgegeben werden kann. Diese anderen Umstände können beispielsweise verschmutzte Ein- bzw. Austrittsfenster der optischen Abstandssensoren sein, die vorteilhafterweise zu detektieren sind.

### Zeichnung

Ausführungsbeispiele der Erfindung sind in der Zeichnung anhand mehrerer Figuren dargestellt und in der nachfolgenden Beschreibung näher erläutert. Es zeigt:
Fig. 1 eine Draufsicht auf ein Fahrzeug, das mit zwei optischen Abstandssensoren versehen ist,
Fig. 2 eine Seitenansicht,
Fig. 3 eine Ansicht von vorne,
Fig. 4 eine schematische Darstellung einer erfindungsgemäßen Anordnung und
Fig. 5 eine Draufsicht auf ein Fahrzeug mit gegenüber Fig. 1 um 45° gedrehten Abstandssensoren und einem weiteren Abstandssensor.

### Beschreibung der Ausführungsbeispiele

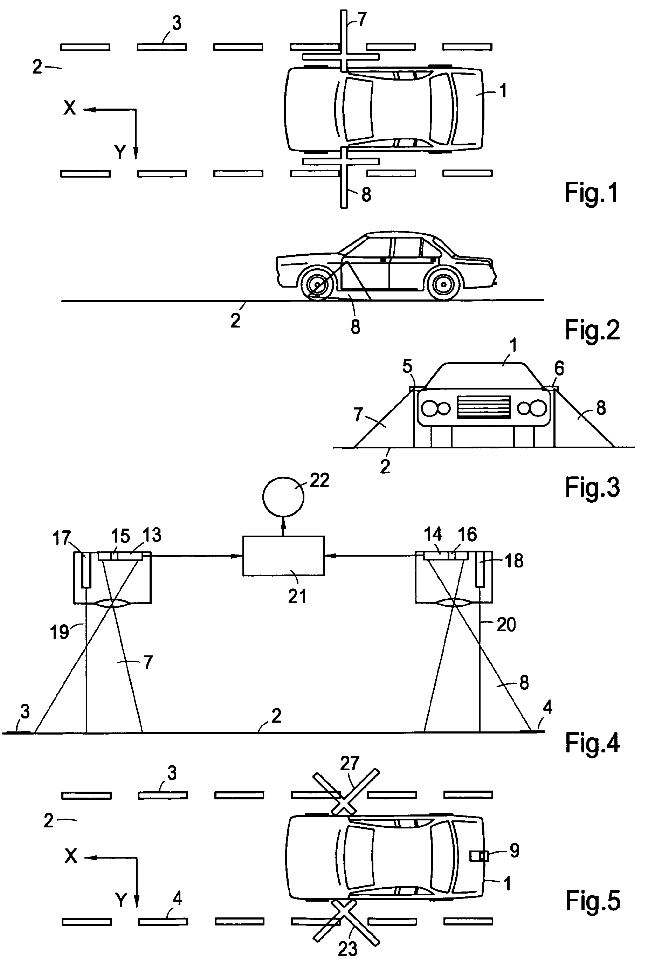

In der Darstellung nach den Figuren 1 bis 3 befindet sich das Fahrzeug 1 auf einer Fahrbahn 2, die von Markierungen 3, 4 begrenzt ist. Die Längsachse des Fahrzeuges ist mit X, die Querachse mit Y gekennzeichnet. Zu beiden Seiten des Fahrzeuges befinden sich optische Abstandssensoren 5, 6 - im folgenden auch einfach Sensoren genannt, die selbst in Fig. 1 nicht sichtbar sind, jedoch durch ihre kreuzförmigen Gesichtsfelder 7, 8 dargestellt sind. Die Gesichtsfelder 7, 8 entstehen dadurch, dass die Abstandssensoren 5, 6 jeweils zwei kreuzförmige Zeilen mit optoelektrischen Wandlern aufweisen (z.B. CCD-Arrays), auf welche ein entsprechender Teil der Fahrbahn 2 abgebildet wird. Im Ausführungsbeispiel sind die Abstandssensoren senkrecht auf die Fahrbahn gerichtet. Es sind jedoch bei der Erfindung auch Abweichungen davon möglich.

Fig. 4 zeigt schematisch die Abstandssensoren 5, 6 mit jeweils einem Objektiv 11, 12, einer der Querachse Y des Fahrzeuges ausgerichteten Sensorzeile 13, 14 und einer in Richtung der Fahrzeugachse X ausgerichteten Sensorzeile 15, 16, welche die Sensorzeile 13 bzw. 14 rechtwinklig kreuzt. Außerdem verfügt jeder der Abstandssensoren 5, 6 über eine Lichtquelle (z.B. Laser) 17, 18, deren Strahl 19, 20 auf die Fahrbahn 2 gerichtet ist.

Ausgangssignale der Sensorzeilen 13 bis 16 werden einer Auswerteeinrichtung 21 zugeführt, die unter anderem einen Prozessor enthält, der verschiedene arithmetische und Bildverarbeitungsoperationen durchführen kann. Zur Messung des Abstands der Sensoren 5, 6 von der Fahrbahn 2 wird der Ort der Abbildung des vom Lichtstrahl 19, 20 auf der Fahrbahn 2 erzeugten Lichtflecks auf der jeweiligen Sensorzeile 13, 14 ermittelt. Die weitere Berechnung erfolgt mit Hilfe einer einfachen geometrischen Beziehung.

Der Unterschied zwischen den Abständen der Sensoren 5, 6 von der Fahrbahn 2 kann berechnet werden und als Wankwinkel angezeigt oder mit einem Schwellwert zur Erzeugung eines Warnsignals verglichen werden, das mit Hilfe einer geeigneten optischen oder akustischen Anzeigevorrichtung 22 den Fahrer warnt.

Ferner kann die Auswerteeinrichtung 21 erkennen, ob Fahrbahnmarkierungen 3 in den Erfassungsbereich der Zeilensensoren 13, 14 geraten und ein entsprechendes Signal auslösen. Zur Beleuchtung der in den Erfassungsbereich geratenen Fahrbahnmarkierungen kann der Lichtstrahl auch nach außen gerichtet oder linienförmig verlängert sein.

Zur Bestimmung der Fahrzeuggeschwindigkeit nehmen die Sensorzeilen 15, 16 jeweils Bilder eines in Längsrichtung verlaufenden Streifens der Fahrbahn auf und prüfen die dadurch entstandenen Signale verschiedener Aufnahmezeitpunkte auf Korrelation. Aus der Verschiebung der als korrelierend erkannten Signale von Abtastwert zu Abtastwert kann auf die entsprechende zurückgelegte Strecke und damit auf die Fahrzeuggeschwindigkeit geschlossen werden.

Im rückwärtigen Teil des in Fig. 5 dargestellten Fahrzeuges 1 befindet sich ein dritter Abstandssensor 9, der ebenfalls auf die Fahrbahn gerichtet ist und ein Gesichtsfeld 10 aufweist. Zur Messung des Nickwinkels wird der Abstand, den der Sensor 9 ermittelt, mit den durch die Sensoren 5, 6 ermittelten Abständen verglichen.

Bei dem Ausführungsbeispiel nach Fig. 5 sind die Zeilensensoren jeweils um 45° gedreht, so dass entsprechende Gesichtsfelder 27, 28 entstehen. Es sind die gleichen Messungen wie bei den nicht gedrehten Sensorzeilen möglich. Bei der Erfassung der Fahrbahnmarkierungen 3, 4 und bei der Bestimmung der Fahrzeuggeschwindigkeit sind jedoch die in Y- und X-Richtung liegenden Komponenten zu berücksichtigen.

## Patentansprüche

1. Anordnung zur Erfassung von Bewegungen eines Fahrzeugs in Bezug auf eine Fahrbahn, wobei an beiden Längsseiten des Fahrzeugs (1) mindestens ein optischer Abstandssensor (5, 6) auf die Fahrbahn (2) gerichtet ist und den Abstand zur Fahrbahn misst und dass aus der Differenz der Messergebnisse beider Seiten ein Maß für den Wankwinkel berechnet wird, wobei
mindestens der eine Abstandssensor (5, 6) mindestens eine Zeile (13, 14, 15, 16) von optoelektrischen Wandlern umfasst, **dadurch gekennzeichnet, dass** auf die Zeile (13, 14, 15, 16) ein Teil der Fahrbahn abgebildet wird, dass in einer vorgegebenen Parallaxe ein Lichtstrahl (19, 20) auf die Fahrbahn (2) gerichtet ist und dass aus dem Ort der Abbildung des vom Lichtstrahl (19, 20) auf der Fahrbahn (2) verursachten Lichtprofils der Abstand von der Fahrbahn (2) berechnet wird und dass die Zeile derart angeordnet ist, dass mindestens eine Komponente (15, 16) parallel zur Fahrzeuglängsachse (X) ist und dass aus der Bewegung von auf der Zeile (15, 16) abgebildeten Fahrbahnstrukturen in Längsrichtung die Fahrzeuggeschwindigkeit gemessen wird.

2. Anordnung nach Anspruch 1, **dadurch gekennzeichnet, dass** ein Warnsignal ausgelöst wird, wenn der Wankwinkel einen vorgegebenen Wert überschreitet.

3. Anordnung nach einem der vorhergehenden Ansprüche, **dadurch gekennzeichnet, dass** die Zeile (13, 14) des optischen Abstandssensors (5, 6) quer zur Längsrichtung des Fahrzeugs (1) angeordnet ist und dass ein Warnsignal beim Erfassen von Fahrbahnmarkierungen (3, 4) ausgelöst wird.

4. Anordnung nach einem der vorhergehenden Ansprüche, **dadurch gekennzeichnet, dass** die optoelektrischen Wandler (5, 6) in zwei sich kreuzenden Zeilen (13, 15; 14, 16) angeordnet sind.

5. Anordnung nach Anspruch 4, **dadurch gekennzeichnet, dass** die sich rechtwinklig kreuzenden Zeilen (13, 15; 14, 16) parallel und senkrecht zur Fahrzeugachse sind.

6. Anordnung nach Anspruch 4, **dadurch gekennzeichnet, dass** die sich rechtwinklig kreuzenden Zeilen jeweils einen Winkel von 45° mit der Fahrzeugachse einschließen.

7. Anordnung nach einem der vorhergehenden Ansprüche, **dadurch gekennzeichnet, dass** mindestens ein weiterer Abstandssensor (9) gegenüber den an beiden Längsseiten des Fahrzeugs (1) angeordneten optischen Abstandssensoren in Längsrichtung versetzt angeordnet ist und dass dessen Abstand zur Fahrbahn (2) zusammen mit den Messergebnissen der optischen Abstandssensoren (5, 6) zur Berechnung des Nickwinkels benutzt wird.

8. Anordnung nach einem der vorhergehenden Ansprüche, **dadurch gekennzeichnet, dass** an beiden Längsseiten mindestens ein optischer Abstandssensor (5, 6) am Rückspiegel angeordnet ist.

9. Anordnung nach einem der vorhergehenden Ansprüche, **dadurch gekennzeichnet, dass** ein Warnsignal abgeleitet wird, wenn mindestens einer der optischen Abstandssensoren kein auswertbares Signal erzeugt.

## Claims

1. Arrangement for sensing movements of a vehicle with respect to an underlying surface, wherein at least one optical distance sensor (5, 6) is directed at the underlying surface (2) on both longitudinal sides of the vehicle (1) and measures the distance to the underlying surface, and in that a measure of the roll angle is calculated from the difference between the measurement results for the two sides, wherein at least the one distance sensor (5, 6) comprises at least one line (13, 14, 15, 16) of opto-electrical converters, **characterized in that** part of the underlying surface is mapped onto the line (13, 14, 15, 16), **in that** a light beam (19, 20) is directed at the underlying surface (2) in a predefined parallax, and **in that** the distance from the underlying surface (2) is calculated from the location of the mapping of the light profile which is caused by the light beam (19, 20) on the underlying surface (2), and **in that** the line is arranged in such a way that at least one component (15, 16) is parallel to the longitudinal axis (X) of the vehicle, and **in that** the speed of the vehicle is measured on the basis of the movement of underlying surface structures in the longitudinal direction which are mapped on the line (15, 16).

2. Arrangement according to Claim 1, **characterized in that** a warning signal is triggered if the roll angle exceeds a predefined value.

3. Arrangement according to one of the preceding claims, **characterized in that** the line (13, 14) of the optical distance sensor (5, 6) is arranged transversely with respect to the longitudinal direction of the vehicle (1), and **in that** a warning signal is triggered when marks (3, 4) on the underlying surface are sensed.

4. Arrangement according to one of the preceding claims, **characterized in that** the opto-electrical converters (5, 6) are arranged in two intersecting lines (13, 15; 14, 16).

5. Arrangement according to Claim 4, **characterized in that** the lines (13, 15; 14, 16) which intersect at right angles are parallel and perpendicular to the axis of the vehicle.

6. Arrangement according to Claim 4, **characterized in that** the lines which intersect at right angles each enclose an angle of 45° with the axis of the vehicle.

7. Arrangement according to one of the preceding claims, **characterized in that** at least one further distance sensor (9) is arranged offset in the longitudinal direction with respect to the optical distance sensors which are arranged on both longitudinal sides of the vehicle (1), and **in that** the distance of said distance sensor (9) to the underlying surface (2) is used, together with the measurement results of the optical distance sensors (5, 6), to calculate the pitch angle.

8. Arrangement according to one of the preceding claims, **characterized in that** at least one optical distance sensor (5, 6) is arranged on the rear view mirror on both longitudinal sides.

9. Arrangement according to one of the preceding claims, **characterized in that** a warning signal is derived if at least one of the optical distance sensors does not generate a signal which can be evaluated.

## Revendications

1. Dispositif pour saisir les mouvements d'un véhicule par rapport à une chaussée selon lequel, les deux côtés longitudinaux du véhicule (1) comportent au moins un capteur optique, de distance (5, 6), dirigé vers la chaussée (2) et mesurant la distance par rapport à la chaussée et à partir de la différence des résultats de mesure des deux côtés, on calcule une mesure de l'angle de roulis, au moins l'un des capteurs de distance (5, 6) comportant au moins une ligne (13, 14, 15, 16) de convertisseurs optoélectroniques,
**caractérisé en ce que**
la ligne (13, 14, 15, 16) copie une partie de la chaussée,
dans un axe parallèle prédéterminé, on dirige un faisceau lumineux (19, 20) sur la chaussée (2) et
à partir de l'emplacement de l'image du profil lumineux donnée par le faisceau lumineux (19, 20) sur la chaussée (2), on calcule la distance par rapport à la chaussée (20) et
la ligne est installée pour qu'au moins un composant (15, 16) soit parallèle à l'axe longitudinal x du véhicule et qu'à partir du mouvement des structures de la chaussée copiées sur la ligne (15, 16) dans la direction longitudinale, on mesure la vitesse du véhicule.

2. Dispositif selon la revendication 1,
**caractérisé en ce qu'**
on déclenche un signal avertisseur si l'angle de roulis dépasse une valeur prédéfinie.

3. Dispositif selon l'une des revendications précédentes,
**caractérisé en ce que**
la ligne (13, 14) du capteur de distance optique (5, 6) est dirigée transversalement à la direction longitudinale du véhicule (1) et un signal avertisseur est déclenché lorsqu'on saisit des marquages de chaussée (3, 4).

4. Dispositif selon l'une des revendications précédentes,
**caractérisé en ce que**
les convertisseurs optoélectroniques (5, 6) sont installés dans deux lignes croisées (13, 15 ; 14, 16).

5. Dispositif selon la revendication 4,
**caractérisé en ce que**
les lignes (13, 15 ; 14, 16) qui se croisent à angle droit, sont parallèles et perpendiculaires à l'axe du véhicule.

6. Dispositif selon la revendication 4,
**caractérisé en ce que**
les lignes qui se croisent à angle droit font chacune un angle de 45° par rapport à l'axe du véhicule.

7. Dispositif selon l'une des revendications précédentes,
**caractérisé en ce qu'**
au moins un autre capteur de distance (9) est décalé dans la direction longitudinale par rapport aux capteurs optiques de distance installés sur les deux grands côtés du véhicule (1) et
sa distance par rapport à la chaussée (2) est utilisée avec les résultats des mesures fournis par les capteurs de distance optiques (5, 6) pour calculer l'angle de tangage.

8. Dispositif selon l'une des revendications précédentes,
**caractérisé en ce que**
les deux grands côtés comportent au moins un capteur de distance optique (5, 6) dans le rétroviseur.

9. Dispositif selon l'une des revendications précédentes,
**caractérisé en ce qu'**
on déduit un signal avertisseur si au moins l'un des capteurs de distance optiques ne génère pas de signal exploitable.
